# FASCICULE DE BREVET EUROPEEN

(11) **EP 2 118 023 B1**
(45) Date de publication et mention de la délivrance du brevet: **28.01.2015**
(21) Numéro de dépôt: 07871932.5
(22) Date de dépôt: 13.12.2007
(51) Int. Cl.: C03B 5/235, C03B 37/01

(54) **PROCÉDÉ DE FABRICATION DE FIBRES DE VERRE UTILISANT UN FOUR A BOUCLE**
VERFAHREN ZUR HERSTELLUNG VON GLASFASERN MITTELS EINES U-FLAMMENOFENS
METHOD OF MANUFACTURING GLASS FIBRES USING AN END FIRED FURNACE

(30) Priorité: 18.12.2006 FR 0655595
(43) Date de publication de la demande: 18.11.2009
(73) Titulaire: SAINT-GOBAIN RECHERCHE, 93300 Aubervilliers (FR)
(72) Inventeur: JACQUES, Didier, 94120 Fontenay Sous Bois (FR)
(74) Mandataire: Colombier, Christian
(86) Numéro de dépôt international: PCT/FR2007/052509
(87) Numéro de publication internationale: WO 2008/078049

(56) Documents cités:
- WO-A-2007/008113
- US-A- 4 542 106
- US-A- 5 116 399
- US-A1- 2005 090 377
- PIEPER H: "LARGE END-FIRED FURNACES WITH A MELTING AREA OF 100 M2 AND MORE 1)" GLASS SCIENCE AND TECHNOLOGY, DEUTSCHE GLASTECHNISCHE GESELLSCHAFT, OFFENBACH, DE, vol. 67, no. 3, 1 mars 1994 (1994-03-01), pages 65-70, XP000433743 ISSN: 0946-7475

## Description

L'invention concerne un dispositif de fusion d'une composition de verre notamment destinée à être transformée en fibres.

Les fibres de verre présentent essentiellement deux types d'applications le renforcement des matériaux composites et l'isolation thermique.

Les compositions de verre destinées au renforcement de matériaux composites (à matrice organique thermodurcissable ou thermoplastique, ou à matrice inorganique, par exemple du type ciment ou béton) sont généralement relativement faciles à fondre dans les fours classiques du type à brûleurs transversaux. Il n'en est pas de même de certaines compositions riches en alumine destinées à l'isolation.

Certaines fibres de haute performance (présentant notamment une meilleure résistance mécanique et une meilleure résistance à la corrosion) doivent contenir de forts taux d'un élément chimique intermédiaire (il s'agit là du terme utilisé par l'homme du métier pour désigner un élément ayant un rôle intermédiaire entre formateur de réseau et modificateur de réseau) comme l'alumine (Al₂O₃) ou la zircone (ZrO₂). Ces éléments confèrent par ailleurs une résistance au feu améliorée. L'ajout de ces éléments aboutit à des compositions plus difficiles à fondre que les verres classiques comme les silicosodocalciques. On ne peut pas toujours faire appel aux fondants réputés efficaces du type oxyde d'alcalin, car ils pénalisent la résistance à là corrosion et la résistance électrique indispensable dans certaines applications. L'oxyde de bore (B₂O₃) fait souvent office de fondant de substitution pour les compositions de verre fibrable et son utilisation a déjà été proposée pour fondre les compositions à haute teneur en alumine dans des fours à brûleurs transversaux.

Pour fondre plus efficacement une composition vitrifiable sans bore, il a déjà été proposé d'ajouter des brûleurs en voûte dans un four à brûleurs transversaux et d'alimenter tous les brûleurs en oxygène de façon à pouvoir atteindre les températures nécessaires. L'usage de l'oxygène en tant que comburant permet par ailleurs d'atteindre des rendements de combustion très élevés. L'oxygène est cependant un comburant onéreux.

Les fours à boucle sont habituellement utilisés pour la fusion de verres classiques du type silicosodocalcique, plus particulièrement pour le verre creux. L'application verre creux est moins nécessiteuse d'une grande qualité de verre, notamment sur le plan du taux de bulles d'affinage, si l'on compare avec l'application verre plat. Le four à boucle convient bien pour l'application verre creux malgré sa relativement faible flexibilité. En effet, un four à boucle a une flamme partant essentiellement de la face amont du four pour y revenir après avoir décrit une boucle, et il n'est pas vraiment possible de moduler son fonctionnement. Le four à boucle est cependant simple dans sa conception, utilise peu de brûleurs et procure des rendements de combustion exceptionnellement élevés. A l'inverse, le four à brûleurs transversaux nécessite beaucoup plus de brûleurs dont le réglage est délicat.

La demanderesse a constaté que l'usage d'un four à boucle n'aboutissait pas nécessairement à des verres fibrables. En effet, dans certains cas, la formation de phases parasites rend le verre final totalement inapte au fibrage. Il s'avère que la présence de bore est sans doute à l'origine de ce problème.

Il a maintenant été trouvé qu'un four à boucle était bien adapté à la fusion de compositions fibrables sans bore et chargées en alumine et/ou zircone. En effet, on a maintenant découvert que le four à boucle offrait un profil de température idéal à la fusion des compositions vitrifiables chargée en alumine et/ou zircone et sans bore, et ce avec un faible nombre de brûleurs. Un faible nombre de brûleurs facilite en effet grandement le réglage d'un four. Des rendements de combustion très élevés, supérieur à 70 % atteignant même 80 % peuvent être obtenus, tout en pouvant utiliser de l'air comme comburant. Le four à boucle procure la forte température nécessaire dès la zone d'enfournement. L'invention permet donc de s'affranchir de l'usage d'oxyde de bore, fondant onéreux. De plus, on a observé que l'absence de bore se traduisait par une moindre formation de mousse en surface du verre, ce qui améliore d'autant les échanges thermiques entre la flamme et le bain en fusion.

Par brûleur, on entend l'ensemble comprenant de façon juxtaposée le ou les injecteurs de combustible et le ou les conduits d'arrivée de comburant, concourant à la formation d'une flamme.

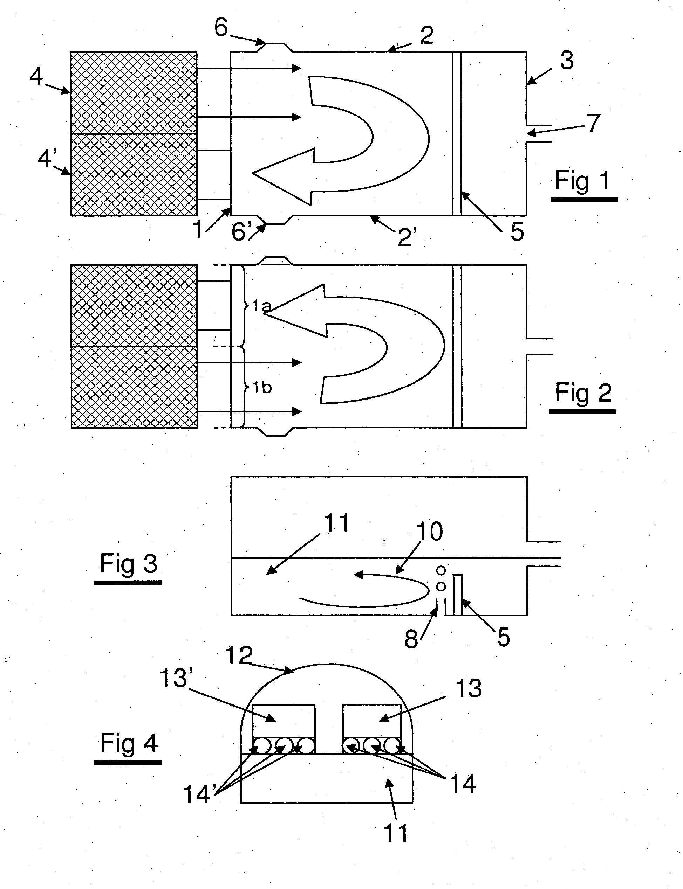

Le document EP805123 a proposé d'utiliser un four à oxy-combustion (utilisation d'oxygène pur en tant que comburant) avec une combustion étagée pour fondre des matières vitrifiables, notamment dans un four à boucle (voir sa fig 3). Toutes les applications possibles pour le verre sont prévues dont en particulier le fibrage. L'objectif principal est ici de réduire l'usure des réfractaires constituant les parois du four. Cependant, l'oxygène pur est un comburant onéreux et l'homme du métier cherche à utiliser de l'air. Cependant, il est impensable de faire de la combustion étagée comme proposé par EP805123 avec de l'air car les débits d'air à apporter sur les côtés nécessiteraient la réalisation de canalisations trop importantes et trop onéreuses.

La combustion étagée ne va pas par ailleurs dans le sens de l'obtention d'un fort rendement de combustion. En effet, les transferts de chaleur sont d'autant plus efficaces que les températures sont élevées. En étageant la combustion, de relativement basses températures sont obtenues, et les transferts de chaleur sont diminués d'autant, conduisant à des infondus (défauts dus à une fusion imparfaite des matières premières vitrifiables) dans le verre final.

On a maintenant découvert que si l'essentiel de l'énergie fossile était apportée par la face amont d'un four à boucle, le verre final était débarrassé de ces défauts indésirables. L'invention permet notamment la fusion de verres à haute teneur en Al₂O₃ et/ou ZrO₂, avec de très hauts rendements de combustion, généralement supérieurs à 70% et allant généralement de 70 à 80%.

Les termes amont et aval sont à interpréter en fonction de la direction d'écoulement de la matière fondue. Un four comporte généralement quatre parois latérales, la face amont étant celle se trouvant le plus en amont, à l'opposé de la face aval située en zone de sortie de la matière fondue.

Ainsi, l'invention concerne un procédé de préparation de fibres de verre comprenant la préparation d'un verre (passant par sa fusion) comprenant moins de 2% en poids d'oxyde de bore (base B₂O₃), et contenant de l'alumine ou de la zircone (et donc le cas échéant de l'alumine et de la zircone) en quantité telle que la somme de la masse d'alumine et de zircone soit d'au moins 8% en poids, la fusion des matières vitrifiables étant réalisée dans un four à boucle équipé de régénérateurs, 100% de l'énergie fossile étant introduite par la flamme en boucle dont le comburant et le carburant sont introduits en face amont dudit four, le comburant étant de l'air ou de l'air enrichi en oxygène, ledit comburant contenant au maximum 30% en volume d'oxygène, suivi de la transformation en fibre dudit verre.

Les matières vitrifiables peuvent être introduites sèches ou humides par la face amont ou en zone amont des parois latérales du four. On les introduit humides si l'on redoute un risque d'envol. De préférence les matières vitrifiables sont enfournées en zone amont des parois latérales du four par des niches en retrait desdites parois latérales de façon à limiter les envols des matières vitrifiables pulvérulentes. Ces niches sont généralement situées dans le premier tiers amont des parois latérales. Les matières vitrifiables sont donc généralement introduites sous forme de poudre à l'endroit des niches latérales. Si elles sont introduites sèches, elles le sont de préférence par l'intermédiaire d'enfourneuses à vis.

Le dispositif de fabrication de fibres minérales comprend un four à boucle pour la fusion de matières vitrifiables, suivi d'une unité de fibrage (du verre en général). Le four à boucle est équipé d'au moins un brûleur en face amont pour produire une flamme en boucle, ladite flamme générant 100% de l'énergie fossile utilisée pour chauffer ledit four. On peut placer entre le four et l'unité de fibrage un compartiment d'affinage, mais cela n'est généralement pas nécessaire. En effet, on a maintenant trouvé que l'application fibrage tolère bien la présence de bulles dans le verre. Par le procédé selon l'invention le verre obtenu peut comprendre de 100 à 6000 bulles (de diamètre inférieur à 50 µm) par litre, ce qui convient bien à l'application fibrage. Un simple canal d'écoulement relie donc généralement le four à boucle à l'unité de fibrage. On ne décrira pas plus en détail l'unité de fibrage dans la présente demande dans la mesure où ce type d'unité correspond à celles décrites dans la littérature et bien connues de l'homme du métier. Les fibres ici visées sont plus particulièrement celle formées au travers d'orifices en utilisant par exemple les procédés de fibrage sous filière ou de fibrage par centrifugation interne dans une assiette de fibrage (voir une description globale de ces procédés dans WO0161088 ou EP0189534). Ainsi, l'invention concerne un procédé de préparation de fibres de verre comprenant le procédé de préparation d'un verre dans un four à boucle, suivi de la transformation en fibre dudit verre.

Le comburant utilisé pour faire fonctionner le four à boucle est de l'air ou de l'air enrichi en oxygène pur, l'oxygène pur apportant au maximum 40% de l'oxygène total dans le courant de comburant, ce qui revient à un comburant contenant au maximum 30% en volume d'oxygène. Ce comburant a une température d'au moins 1250°C et de préférence d'au moins 1350°C. Cette température est atteinte grâce à l'usage des régénérateurs. Le comburant est en effet chauffé par un régénérateur avant d'être introduit dans le four.

Les régénérateurs sont bien connus de l'homme du métier. Ils sont placés derrière la face amont du four. Ils sont constitués de briques réfractaires (ce qui englobe les briques en céramique réfractaire) placées dans deux compartiments séparés fonctionnant l'un après l'autre. La flamme est envoyée de l'une des moitiés de la face amont, puis elle balaye l'atmosphère du four en décrivant une boucle pour revenir en direction de l'autre moitié de la face amont. Les fumées sont récupérées par un orifice dans cette autre moitié de la face amont et leur chaleur chauffe les briques réfractaires placées dans l'un des régénérateurs placés derrière la face amont. Lorsque les briques réfractaires sont bien chaudes, on inverse le fonctionnement du four, en faisant partir la flamme de l'autre moitié du four et en récupérant ses fumées par l'autre régénérateur placé derrière l'autre moitié du four. Le régénérateur chaud sert à chauffer l'air ou l'air enrichi en oxygène utilisé comme comburant de la flamme. Le carburant (par exemple fioul liquide ou gaz combustible du type méthane, propane ou butane) est introduit séparément du comburant, mais à proximité de cette introduction de comburant. Dans tous les cas, le carburant et le comburant sont introduits par la même moitié de la face amont. On fait donc fonctionner le four dans un sens jusqu'à l'obtention d'une température d'au moins 1250°C dans le régénérateur récupérant les fumées, puis l'on inverse le fonctionnement du four. La température tolérable dans le régénérateur dépend bien entendu du choix des matériaux utilisés. L'usage de certaines céramiques permet même d'atteindre des températures supérieures à 1450°C, et même de l'ordre de 1500 °C. On a par ailleurs constaté l'absence de dépôts provenant des fumées dans les régénérateurs. Le faible taux d'oxyde de bore (et le cas échéant le faible taux d'oxyde d'alcalin) des compositions utilisées semble être à l'origine de cette absence.

En plus de l'énergie fossile apportée au travers de la face amont, le four est généralement équipé d'un chauffage électrique d'appoint représentant généralement de 0 à 50% de l'énergie totale utilisée dans le four. Ainsi, généralement 0 à 50%, et plus généralement 5 à 30% de l'énergie totale est d'origine électrique (qui n'est pas une énergie fossile). On cherche généralement à utiliser le plus possible d'énergie fossile sous réserve de ne pas dépasser la température que peut supporter la voûte du four. On se place donc à un niveau d'énergie fossile maximum en fonction de la tenue des réfractaires de la voûte, et l'on complète l'énergie nécessaire par un apport électrique, généralement constitué d'électrodes noyées dans le bain en fusion. L'apport électrique permet également d'augmenter la tirée du four.

Le four peut être équipé d'un barrage (réfractaire) immergé dans le verre fondu et placé dans la moitié aval voire même dans le dernier tiers aval du four. Ce barrage a pour fonction de favoriser des courroies de convection à l'intérieur du bain de verre fondu. Ces mouvements constituent une agitation, augmentent le temps de séjour, ce qui se traduit par une diminution du taux d'infondus. En moyenne, le verre peut faire par exemple des dizaines de tours avant de quitter le four par l'orifice d'écoulement de sortie en aval. On peut également prévoir une rangée transversale de bouillonneurs placée en amont du barrage, généralement juste avant le barrage pour faciliter la convection. Ces bouillonneurs ont aussi pour fonction de chasser la mousse pour améliorer le transfert de chaleur de la flamme au verre.

Les verres concernés par la présente invention comprennent généralement au moins 35 % en poids et généralement au maximum 70% en poids de silice. Ce verre contient généralement moins de 2 % en poids voire même moins de 1% en poids d'oxyde de bore (B₂O₃). Notamment, le verre E pas ou peu chargé en bore est bien adapté. L'oxyde de bore (base B₂O₃) peut néanmoins être éventuellement présent dans le verre final à raison d'au moins 1 ppm en poids. Le verre peut même comprendre un faible taux d'oxyde d'alcalin, notamment moins de 1% en poids, voire même en être exempt. Cependant, de préférence, le verre comprend suffisamment de fondant du type oxyde d'alcalin (R₂O avec R= Na, Li ou K) et oxyde d'alcalino-terreux (comme MgO, CaO, BaO, SrO) (somme de la masse des oxydes d'alcalin et de la masse des oxydes d'alcalino-terreux) pour que sa température de liquidus soit inférieure à 1250°C, et même de préférence inférieure à 1200°C. Ainsi, dans le verre utilisé selon l'invention, la somme de la masse des oxydes d'alcalin et de la masse des oxydes d'alcalino-terreux est généralement supérieure à 20% en poids et inférieure à 40% en poids.

Le verre comprend de l'alumine (Al₂O₃) ou de la zircone (ZrO₂) (ce qui signifie qu'il peut comprendre de l'alumine et de la zircone) de sorte que la somme des pourcentages en poids d'Al₂O₃ et de ZrO₂ est d'au moins 8% en poids et généralement d'au moins 10% en poids et même d'au moins 12% en poids, et cependant généralement inférieure à 25% en poids. Notamment, le verre peut ne pas comprendre de zircone, auquel cas le verre comprend alors au moins 10% en poids d'alumine et généralement moins de 25% d'alumine. L'invention est plus particulièrement adaptée aux compositions présentant une fusion du type eutectique ou essentiellement du type eutectique, ce qui signifie qu'au moins 95% en poids de la matière vitrifiable présente une fusion du type eutectique.

La figure 1 représente un four à boucle utilisable dans le cadre de la présente invention, vu de dessus. Ce four comprend une face amont 1, deux faces latérales 2 et 2' et une face aval 3. Il est muni de deux régénérateurs 4 et 4' identiques, juxtaposés et placés tous deux derrière la face amont. Chaque régénérateur est placé derrière une moitié de la face amont. Des niches 6 et 6' sont ménagées dans les parois latérales 2 et 2' pour l'introduction des matières vitrifiables. Ces niches sont placées dans le premier tiers amont des parois latérales. Un barrage 5 immergé dans le bain en fusion est prévu dans la moitié aval du four. Dans le cas de la figure 1, la flamme est issue d'une moitié 1a de la face amont. Elle forme une boucle dans l'atmosphère du four pour retourner vers l'autre moitié 1 b de la face amont. Les fumées traverseront alors le régénérateur 4' placé derrière la moitié 1 b de la face amont. Lorsque les briques réfractaires dans le régénérateur 4' sont suffisamment chaudes, le fonctionnement du four est inversé selon la figure 2. Dans ce cas, la flamme est issue de la demie moitié 1 b de la face amont et la chaleur des fumées est récupérée dans l'autre régénérateur 4. Le comburant de la flamme est de l'air réchauffé en traversant le régénérateur 4'. Le verre final s'écoule à travers l'orifice 7 ménagé dans la face aval 3 du four. Ce verre alimente ensuite une unité de fibrage.

La figure 3 représente le four vu de côté à travers une paroi latérale. On distingue le barrage 5, les bouillonneurs 8 générant des bulles pour écarter la mousse en surface du verre et faciliter les échanges thermiques entre la flamme et le bain en fusion 11. Des courroies de convection 10 sont créées au sein du bain en fusion 11.

La figure 4 représente le four vu de côté à travers la paroi aval 3. Au-dessus du bain en fusion 11, et sous la voûte 12 du four, on distingue les deux systèmes de génération de la flamme en boucle, lesdits systèmes fonctionnant l'un après l'autre. Chaque système de génération de la flamme comprend une arrivée d'air 13 et 13' et des injecteurs de combustible 14 et 14'.

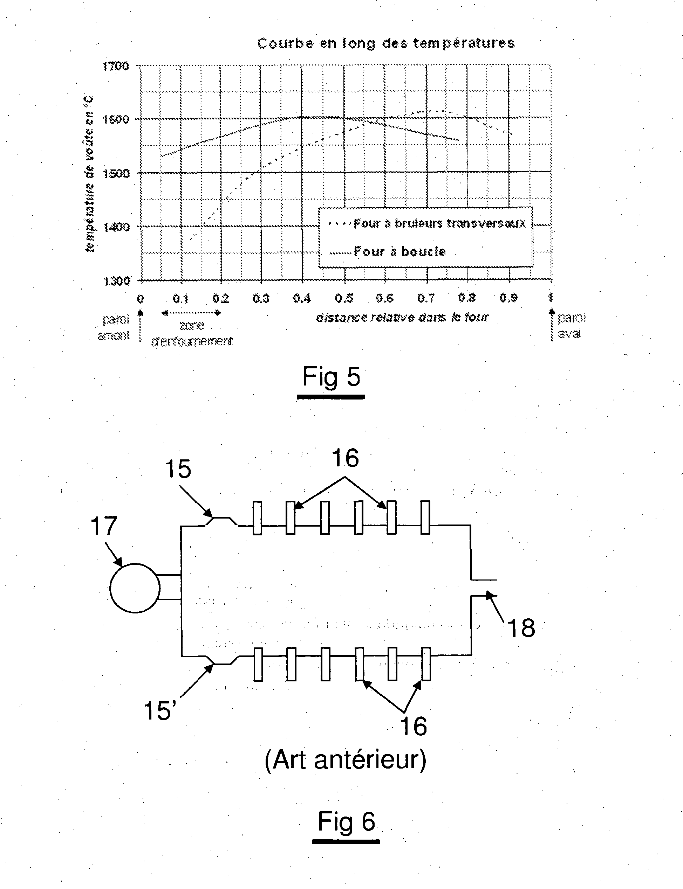

La figure 5 compare les courbes en long de la température (évolution de la température dans le sens d'écoulement du verre) dans le cas du four à boucle utiliser dans le procédé selon l'invention et dans lé cas d'un four classique à brûleurs transversaux, à surface, et puissance de chauffe identique. On voit que le four à boucle procure une plus forte température très en amont, ce qui est très favorable à la fusion des verres riches en Al₂O₃ et/ou ZrO₂. Le four à brûleurs transversaux ne monte pas aussi vite en température, ce qui mène à des infondus dans le cas des matières vitrifiables envisagées dans le cadre de la présente invention si la tirée devient importante. La figure 6 représente ce four à brûleurs transversaux classique de l'art antérieur, vu de dessus. Pour ce four, les matières vitrifiables sont aussi introduites par des niches 15 et 15' situées en amont dans les parois latérales. De nombreux brûleurs transversaux 16 équipent les parois latérales. La chaleur des fumées est récupérée par le récupérateur 17. Le verre est récupéré par la sortie 18. Rappelons qu'un récupérateur fonctionne sur le modèle d'un échangeur de chaleur, les fumées passant par un canal réchauffant de l'air passant par un autre canal et venant alimenter les brûleurs transversaux. Dans le cas de régénérateurs (utilisés dans le cadre de l'invention), il n'y a qu'un seul canal, les gaz de combustion venant chauffer les éléments de réfractaire contenus dans le régénérateur, puis l'on procède à une inversion, de l'air frais parcourant ensuite le régénérateur pour être réchauffé et alimenter la veine d'air du brûleur. Ce type de fonctionnement implique que les régénérateurs fonctionnent généralement par paire. Il aurait été envisageable de réaliser un four à brûleurs transversaux équipé de régénérateurs, afin d'augmenter les rendements de combustion et approcher ceux du four à boucle. Cependant, chaque brûleur aurait dû posséder sa fenêtre de pénétration d'air, extrêmement onéreuse. Pour atteindre les températures en amont observées dans le cas du four à boucle, il faudrait de plus placer des brûleurs transversaux en amont des niches d'enfournement. En supposant même que l'on atteigne ainsi les performances thermiques (profil de température et rendements de combustion) du four à boucle, il n'en demeure pas moins qu'autant de fenêtres de pénétration que de brûleurs sont nécessaires, ce qui engendre des coûts considérables compte tenu du nombre de brûleurs impliqués. Aucun four à brûleurs transversaux ne peut donc atteindre les performances du four à boucle pour les compositions envisagées, à coûts égaux. Ce résultat ne découle pas de manière évidente pour l'homme du métier.

## Revendications

1. Procédé de préparation de fibres de verre comprenant la préparation d'un verre (11) comprenant moins de 2% en poids d'oxyde de bore, et contenant de l'alumine ou de la zircone en quantité telle que la somme de la masse d'alumine et de zircone soit d'au moins 8% en poids, la fusion des matières vitrifiables étant réalisée dans un four à boucle équipé de régénérateurs (4, 4'), 100% de l'énergie fossile étant introduite par la flamme en boucle dont le comburant et le carburant sont introduits en face amont (1) dudit four, le comburant étant de l'air ou de l'air enrichi en oxygène, ledit comburant contenant au maximum 30% en volume d'oxygène, suivi de la transformation en fibre dudit verre.

2. Procédé selon la revendication précédente, **caractérisé en ce que** le verre comprend suffisamment de fondant du type oxyde d'alcalin ou oxyde d'alcalino-terreux pour que sa température de liquidus soit inférieure à 1250°C.

3. Procédé selon la revendication précédente, **caractérisé en ce que** le verre comprend suffisamment de fondant du type oxyde d'alcalin ou oxyde d'alcalino-terreux pour que sa température de liquidus soit inférieure à 1200°C.

4. Procédé selon l'une des revendications précédentes, **caractérisé en ce que** la somme de la masse des oxydes d'alcalin et de la masse des oxydes d'alcalino-terreux est supérieure à 20% en poids.

5. Procédé selon l'une des revendications précédentes, **caractérisé en ce que** la somme de la masse des oxydes d'alcalin et de la masse des oxydes d'alcalino-terreux est inférieure à 40% en poids.

6. Procédé selon l'une des revendications précédentes, **caractérisé en ce que** le comburant est de l'air.

7. Procédé selon l'une des revendications précédentes **caractérisé en ce que** 0 à 50% de l'énergie totale est d'origine électrique.

8. Procédé selon la revendication précédente, **caractérisé en ce que** 5 à 30% de l'énergie totale est d'origine électrique.

9. Procédé selon l'une des revendications précédentes, **caractérisé en ce que** le verre contient moins de 1% d'oxyde de Bore.

10. Procédé selon l'une des revendications précédentes, **caractérisé en ce que** le verre contient de l'alumine ou de la zircone en quantité telle que la somme de la masse d'alumine et de zircone soit d'au moins 10% en poids.

11. Procédé selon la revendication précédente, **caractérisé en ce que** le verre contient de l'alumine ou de la zircone en quantité telle que la somme de la masse d'alumine et de zircone soit d'au moins 12% en poids.

12. Procédé selon l'une des revendications précédentes **caractérisé en ce que** pour la transformation en fibre dudit verre les fibres passent au travers d'orifices.

13. Procédé selon l'une des revendications précédentes, **caractérisé en ce que** le comburant est introduit dans le four à une température d'au moins 1250°C.

## Patentansprüche

1. Verfahren zur Herstellung von Glasfasern, umfassend die Herstellung eines Glases (11) mit weniger als 2 Gewichtsprozent Boroxid und umfassend Aluminiumoxid oder Zirconiumoxid in einer Menge, die so hoch ist, dass die Massensumme von Aluminiumoxid und Zirconiumoxid mindestens 8 Gewichtsprozent beträgt, wobei die Verschmelzung der verglasbaren Stoffe in einem U-Flammenofen erfolgt, der mit Regeneratoren (4, 4') versehen ist, wobei 100 % fossile Energie durch die U-Flamme eingesetzt werden, deren Sauerstoffträger und deren Brennstoff auf der vorgelagerten Seite (1) des Ofens eingesetzt werden, wobei der Sauerstoffträger aus Luft oder aus mit Sauerstoff angereicherter Luft gebildet ist, wobei der Sauerstoffträger höchstens 30 Volumenprozent Sauerstoff enthält, gefolgt von der Umwandlung des Glases in Fasern.

2. Verfahren nach dem vorhergehenden Anspruch, **dadurch gekennzeichnet, dass** das Glas ausreichend Schmelzzusatz in Form einesAlkalimetalloxids oder Erdalkalimetalloxids umfasst, damit seine Liquidustemperaturgeringer als 1250 °C ist.

3. Verfahren nach dem vorhergehenden Anspruch, **dadurch gekennzeichnet, dass** das Glas ausreichend Schmelzzusatz in Form eines Alkalimetalloxids oder Erdalkalimetalloxids umfasst, damit seine Liquidustemperatur kleiner als 1200 °C ist.

4. Verfahren nach einem der vorhergehenden Ansprüche, **dadurch gekennzeichnet, dass** die Massensummevon Alkalimetalloxid und Erdalkalimetalloxid mehr als 20 Gewichtsprozent beträgt.

5. Verfahren nach einem der vorhergehenden Ansprüche, **dadurch gekennzeichnet, dass** die Massensummevon Alkalimetalloxid und Erdalkalimetalloxid weniger als 40 Gewichtsprozent beträgt.

6. Verfahren nach einem der vorhergehenden Ansprüche, **dadurch gekennzeichnet, dass** der Sauerstoffträger Luft ist.

7. Verfahren nach einem der vorhergehenden Ansprüche, **dadurch gekennzeichnet, dass** 0 bis 50 % der Gesamtenergie aus elektrischer Energie stammen.

8. Verfahren nach dem vorhergehenden Anspruch, **dadurch gekennzeichnet, dass** 5 bis 30 % der Gesamtenergie aus elektrischer Energie stammen.

9. Verfahren nach einem der vorhergehenden Ansprüche, **dadurch gekennzeichnet, dass** das Glas weniger als 1 % Boroxid enthält.

10. Verfahren nach einem der vorhergehenden Ansprüche, **dadurch gekennzeichnet, dass** das Glas Aluminiumoxid oder Zirconiumoxid in einer Menge enthält, die so hoch ist, dass die Massensummevon Aluminiumoxid und Zirconiumoxid mindestens 10 Gewichtsprozent beträgt.

11. Verfahren nach dem vorhergehenden Anspruch, **dadurch gekennzeichnet, dass** das Glas Aluminiumoxid oder Zirconiumoxid in einer Menge enthält, die so hoch ist, dass die Massensummevon Aluminiumoxid und Zirconiumoxid mindestens 12 Gewichtsprozent beträgt.

12. Verfahren nach einem der vorhergehenden Ansprüche, **dadurch gekennzeichnet, dass** für die Umwandlung in Glasfasern die Fasern durch Öffnungen gelangen.

13. Verfahren nach einem der vorhergehenden Ansprüche, **dadurch gekennzeichnet, dass** der Sauerstoffträger bei einer Temperatur von mindestens 1250 °C in den Ofen eingegeben wird.

## Claims

1. A method of producing glass fibers, which comprises the method of preparing a glass (11) comprising less than 2% boron oxide by weight and containing alumina or zirconia in an amount such that the sum of the mass of alumina and the mass of zirconia is at least 8% by weight, the melting of the batch materials being carried out in an end-fired furnace (4,4') equipped with regenerators, 100% of the fossil energy being introduced by the U-flame, the fuel and oxidant for which are introduced at the upstream face (1) of said furnace, the oxidant being air or oxygen-enriched air, said oxidant containing at most 30% oxygen by volume, followed by the conversion of said glass into fiber.

2. The method as claimed in the preceding claim, **characterized in that** the glass contains sufficient flux of the alkali metal oxide or alkaline-earth metal oxide type for its liquidus temperature to be below 1250°C.

3. The method as claimed in the preceding claim, **characterized in that** the glass contains sufficient flux of the alkali metal oxide or alkaline-earth metal oxide type for its liquidus temperature to be below 1200°C.

4. The method as claimed in one of the preceding claims, **characterized in that** the sum of the mass of alkali metal oxides and the mass of the alkaline-earth metal oxides is greater than 20% by weight.

5. The method as claimed in one of the preceding claims, **characterized in that** the sum of the mass of alkali metal oxides and the mass of the alkaline-earth metal oxides is less than 40% by weight.

6. The method as claimed in one of the preceding claims, **characterized in that** the oxidant is air.

7. The method as claimed in one of the preceding claims, **characterized in that** 0 to 50% of the total energy is of electric origin.

8. The method as claimed in the preceding claim, **characterized in that** 5 to 30% of the total energy is of electric origin.

9. The method as claimed in one of the preceding claims, **characterized in that** the glass contains less than 1 % of boron oxide.

10. The method as claimed in one of the preceding claims, **characterized in that** the glass contains alumina or zirconia in an amount such that the sum of the mass of alumina and zirconia is at least 10% by weight.

11. The method as claimed in the preceding claim, **characterized in that** the glass contains alumina or zirconium in an amount such that the sum of the mass of alumina and zirconia is at least 12% by weight.

12. The method as claimed in one of the preceding claims, **characterized in that**, for the conversion of said glass into fiber, the fibers pass through orifices.

13. The method as claimed in one of the preceding claims, **characterized in that** the oxidant is introduced into the furnace at a temperature of at least 1250°C.
